# EUROPEAN PATENT SPECIFICATION

(11) **EP 1 238 256 B1**
(45) Date of publication and mention of the grant of the patent: **28.06.2006**
(21) Application number: 00990212.3
(22) Date of filing: 14.12.2000
(51) Int. Cl.: G01N 1/31, G01N 1/44

(54) **RAPID TISSUE PROCESSOR**
SCHNELLE GEWEBEAUFBEREITUNGSVORRICHTUNG
DISPOSITIF DE TRAITEMENT RAPIDE DE TISSUS

(30) Priority: 14.12.1999 US 170545 P
(43) Date of publication of application: 11.09.2002
(73) Proprietor: THE UNIVERSITY OF MIAMI, Miami, FL 33101 (US); Essenfeld, Ervin, Caracas 1071 (VE); Essenfeld, Harold, Caracas 1071 (VE)
(72) Inventor: ESSENFELD, Ervin, Avenida Sucre de los Dos Caminos, Caracas 1071 (VE); ESSENFELD Harold, Avenida Sucre de los Dos Caminos, Caracas 1071 (VE); MORALES, Azorides, R., East Tower, Room 2046, Miami, FL 33136 (US); KIMREY, Harold, D., Knoxville, TN 37932 (US)
(74) Representative: Gille Hrabal Struck Neidlein Prop Roos
(86) International application number: PCT/US2000/033760
(87) International publication number: WO 2001/044783

(56) References cited:
- EP-A- 0 680 243
- EP-A- 0 822 403
- EP-A- 0 849 582
- WO-A-99/09390
- US-A- 5 230 865
- US-A- 5 782 897
- US-A- 5 875 286

## Description

### BACKGROUND OF THE INVENTION

### 1. Field of the Invention

The present invention relates to the rapid, continuous flow, processing of tissue for histology, from fixation to impregnation. In particular, it relates to an automated tissue processing system that can be operated with continuous throughput and uses a sequential series of different non-aqueous chemical solutions to harden a tissue specimen and to produce a wax-impregnated tissue specimen suitable for embedding and sectioning.

### 2. Description of the Related Art

Conventional methods prepare tissues for histology by incubation in separate solutions of phosphate-buffered 10% formaldehyde for fixation, a series of increasing concentrations of ethanol for dehydration, and xylene for clearing tissue of dehydration agent, prior to impregnation. Because of the time required for this process, usually 8 hours or longer, it is customary to complete these separate steps - fixation, dehydration, clearing, and impregnation - overnight in automated mechanical instruments designed for those tasks (see, for example, U.S. Patent Nos. 3,892,197; 4,141,312; and 5,049,510).

Automated tissue processors implementing such conventional processes are manufactured and sold by, for example, Shandon (HYPERCENTER and PATHCENTRE models), Miles-Sakura (TISSUE-TEK models), and Mopec-Medite (TPC15 model).

A disadvantage of the prior art is that such automated systems have not been capable of continuous throughput. Given the time required to complete tissue processing, cassettes containing tissues are loaded into the system during the day and tissue processing is completed in an overnight cycle. Thus, operation of the prior art systems did not allow tissue-containing cassettes to be processed to completion during the work day.

For example, the TISSUE-TEK vacuum infiltration processor (VIP) series requires more than eight hours for completion of processing. Baskets holding the cassettes are placed in a retort in which tissue is processed. In addition, 14 stations supply solutions of various compositions to the retort. User-programmable software controls this automated process. A rotary valve regulates the movement of solutions between the retort and the various stations; applying pressure or vacuum to the retort when the valve is open causes solution to be pumped out of or pumped into the retort, respectively. Upon completion of a processing run, the instrument automatically prompts the use for a cleaning cycle; this requirement can be overridden only if no paraffin is used. Typically, tissue specimens are batch processed according to the following program:

| | **Solution** | **Concentration** | **Set Time (min)** | **Set Temperature** | **P/V **** | **Agitation** | **Volume of Solution** |
|---|---|---|---|---|---|---|---|
| 1 | Buffered formalin | 10% | 50 | 40°C | On | On | 2.2-3.2L |
| 2 | Buffered formalin | 10% | 50 | 40°C | On | On | 2.2-3.2L |
| 3 | Alcohol* | 80% | 50 | 40°C | On | On | 2.2-3.2L |
| 4 | Alcohol | 95% | 50 | 40°C | On | On | 2.2-3.2L |
| 5 | Alcohol | 95% | 50 | 40°C | On | On | 2.2-3.2L |
| 6 | Alcohol | 100% | 50 | 40°C | On | On | 2.2-3.2L. |
| 7 | Alcohol | 100% | 50 | 40°C | On | On | 2.2-3.2L |
| 8 | Alcohol | 100% | 50 | 40°C | On | On | 2.2-3.2L |
| 9 | Xylene | 100% | 50 | 40°C | On | On | 2.2-3.2L |
| 10 | Xylene | 100% | 50 | 40°C | On | On | 2.2-3.2L |
| 11 | Paraffin | | 50 | 60°C | On | On | 4L |
| 12 | Paraffin | | 50 | 60°C | On | On | 4L |
| 13 | Paraffin | | 50 | 60°C | On | On | 4L |
| 14 | Paraffin | | 50 | 60°C | On | On | 4L |

| | | | | | | | |
|---|---|---|---|---|---|---|---|
| ** - P/V (Pressure/Vacuum): agitation is provided by alternating the application of pressure and vacuum to the retort when "P/V" is On. Otherwise, when "Agitation" is On, agitation can also be provided by pumping in and then pumping out the same solution every 20 minutes. | | | | | | | |
| * - The alcohol used in most laboratories is a mixture of 90% ethyl, 5% methyl, and 5% isopropyl alcohol. | | | | | | | |

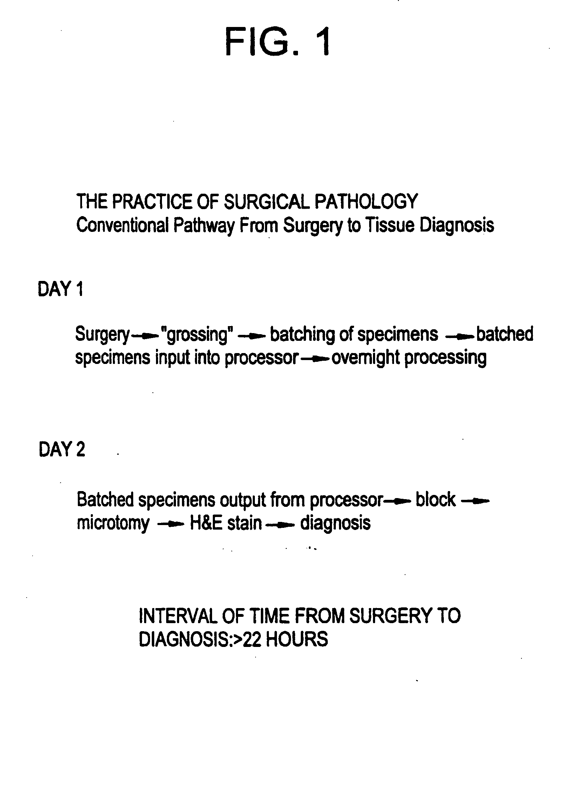

Typically such conventional methodology demands sending tissue specimens from the operating room, medical office or other sites, to a pathology laboratory sometime during the working day; overnight batch processing of the specimens, so that a tissue specimen suitable for blocking and sectioning is only available on the morning of the next day; and rendering a diagnosis by a pathologist based on microscopic examination of sections prepared from a blocked and sectioned specimen later on that next day (Figure 1). This requires almost 24 hours between receipt of the specimen and delivery of the pathologist's report. Although a shortened version of the conventional method is presently practiced, it is feasible only for small biopsies. These biopsies need to be fixed for at least about 30 minutes before initiating the processing cycle. The instrument processing cycle can be programmed to last a minimum of 70 minutes, but is preferably 2 to 2 ½ hours.

In addition to the minimum one-day delay in giving a surgeon the benefit of a report from the pathologist, there are also problems associated with impeded work flow in the pathology laboratory necessitated by the requisite batch processing of specimens, the safety concerns that attend having instruments operating overnight, the risk of possible instrument failures and the need to monitor the instruments, and the waste of using large volumes of reagents for such processing when automated. Moreover, expensive measures are required to prevent exposure of laboratory personnel to noxious fumes and toxic substances associated with the reagents used in this process. Also, the large volumes of solvent waste and paraffin debris produced by the conventional methodology will pollute the environment if not properly disposed.

Conventional fixation and processing also cause irreversible damage (e.g., hydrolysis of a phosphodiester bond and/or deamidation) to the structure of nucleic acids (e.g., DNA, and especially RNA) that limits the application of genetic techniques for diagnosis and research. Consequently, most DNA and certainly RNA analysis require special precautions with handling of material, such as immediate freezing of fresh tissues to prevent degradation, because retrospective genetic analysis is impaired by the conventional methodology.

Histological diagnosis of a frozen section suffers from multiple disadvantages in comparison to sections prepared from paraffin blocks. U.S. Patent No. 3,961,097 cautions that the slide prepared from a frozen section "does not possess ... uniformity of quality;" "it is technically more difficult for serial sections of the same specimen to be examined;" "extreme caution must be exercised in cutting the specimen in order to ensure a sufficiently thin section and to avoid the possibility of damaging details of the specimen;" and all the slides must be prepared "while the tissue is in the initial frozen state" because "[i]f the tissue is thawed and refrozen for sectioning, it is severely damaged."

There is an ever present interest in expediting tissue processing and analysis for diagnostic purposes. Furthermore, recent healthcare focus has been directed to lessening the cost of various procedures including tissue processing. The costs of tissue processing are related to the time for processing and analysis of the specimens, the space required for the personnel and equipment in the laboratory, the volume of reagents (both the purchase price of the pure chemicals and the charges for discarding waste), and the number of personnel required. More importantly, patients and their physicians depend on evaluation and diagnosis by the pathologist to guide treatment. Reducing the amount of time needed to complete tissue processing would lessen the anxiety experienced during the period between obtaining the specimen and delivering the pathologist's report to the surgeon.

Others have recognized the need to shorten the time required for tissue processing, but they have made only modest improvements in the conventional methods. To accelerate tissue processing, U.S. Patent Nos. 4,656,047, 4,839,194, and 5,244,787 use microwave energy; U.S. Patent Nos. 3,961,097 and 5,089,288 use ultrasonic energy; and U.S. Patent No. 5,023,187 uses infrared energy. U.S. Patent No. 5,104,640 disclosed a non-aqueous composition of a fixative, a stabilizing agent, and a solubilizing agent that adheres a blood smear to a slide. But the aforementioned patents do not teach or suggest that the entire process of preparing diagnostic tissue slides could be accomplished in less than two hours, starting from fixation and ending with impregnation, with continuous processing of specimens.

Microwave ovens similar in design to those used in home cooking have been used to accelerate the time required for tissue processing. U.S. Patent No. 4,656,047 claims a method of tissue processing in which at least one of the dehydrating, clearing, or impregnating steps utilizes microwave energy. Fixation may be accomplished by immersing the tissue specimen in chemical fixative and then exposing the specimen to microwave energy for a time sufficient to chemically fix the specimen. U.S. Patent No. 4,839,194 claims a method of fixing a tissue specimen at a temperature not to exceed 40°C in which the non-thermal effects of microwave energy are used. U.S. Patent Nos. 4,839,194 and 5,244,787 claim a method of staining tissue specimens utilizing microwave energy. WO 99/09390 describes the use of conventional microwave ovens in the histological processing of tissue specimens but they do not have an interior configuration which is a whispering gallery mode.

In such conventional methods of tissue processing, the distribution of microwave energy is not uniform because of reflection and interference effects within the chamber in which the microwaves resonate and the waveguide that conducts the microwave energy from the source to the chamber. U.S. Patent No. 4,835,354 proposes a mechanical solution utilizing a rotating platform to ensure uniform contact with the microwaves, and mixers and isolaters that disperse and absorb microwaves. U.S. Patent No. 5,289,140 proposes a solution that utilizes a combination of microwaves of different wavelengths and/or intensities, or sources emitting microwaves of different frequencies. U.S. Patent No. 5,796,080 discloses adjustable moderating means between the waveguide and a plurality of resonance chambers to individually control the chemical reaction in each chamber, such that the propagated mode of the microwaves in the wave-guide is not substantially changed. EP 0 680 243 describes a microwave unit with a whispering gallery more but it neither teaches not suggest its use in bistological processing of tissue specimens.

We now describe a microwave unit that provides gentle uniform heating during tissue processing in a manner distinct from that disclosed in the aforementioned patents. Such operation causes minimal damage to the processed tissue, and results in a superior specimen for subsequent histologic studies by a pathologist or cell biologist. In contrast to the solutions disclosed in the patent discussed above, the microwave unit of the present invention does not use a resonance chamber which would be sensitive to the contents of the chamber. This is an important consideration when heating a region that is larger in all dimensions than about 10%-20% of the wavelength of the microwave used and the chemical compositions in the chamber change in different steps of the process. In the invention, microwave energy is distributed into the solution and tissue in such a way as to minimize interference effects. By distributing the energy, it is absorbed by the solution and tissue in one pass through the materials.

Some improvements that result from the invention are summarized here, but other improvements are described below. Convective heat losses from the reaction chamber and the evaporation rate of liquid in the reaction chamber are reduced, volatile substances are prevented from contacting electronic components and vented to protect the laboratory personnel in the vicinity of the unit, errors committed during processing by a human operator are eliminated, the power required by the unit to maintain the liquid temperature in the reaction chamber is reduced, and labor and reagent costs are reduced with this system as compared to manual operation. More subjectively, consistency in the quality of tissue specimens processed by the disclosed process is improved. Although one microwave unit may be used advantageously, multiple units may be operationally and physically linked to accelerate chemical reactions performed in batch and/or continuous mode.

### SUMMARY OF THE INVENTION

It is an object of the invention to provide a microwave unit and a system for tissue processing that reduces the time required for processing and analysis, and reduces the cost thereof. The tissue processing system is capable of automation and, preferably, accepts specimens in a continuous manner. This allows conversion of existing practice to rapid response surgical pathology for the patient undergoing an operation, and may even allow point-of-care diagnosis by the pathologist in the vicinity of the operating room.

In particular, the microwave unit can provide gentle heating of tissue specimens and prevents over-cooking. Uniform heating in the reaction chamber ensures specimens at different locations in the chamber are maintained at about the same temperature. Thus, both the temperature throughout the chamber and during steps of the process are kept substantially the same. A preferred configuration for the chamber is built in whispering gallery mode. Disadvantages of conventional microwave ovens (e.g., hot spots that over-cook tissue and do not maintain a solution at substantially the same temperature within the chamber) are avoided by the invention.

The system for tissue processing utilizes the microwave unit as at least one module of the system. Such system may be manually operated or automated. Tissue specimens may be loaded into the system and processed either continuously and/or batchwise. Throughput may also be increased by using a plurality of individual systems arranged in parallel. Continuous processing is accessing an individual series of modules with a tissue specimen or batches thereof prior to the completion of processing without otherwise interrupting the system. The system may be adapted for use in the processes described herein and in previously filed applications; or in other histochemical reactions.

The present invention relates to the use of a microwave unit for processing a tissue specimen of less than three millimeters for histology, the microwave unit comprising:
(a) a source with generates microwave radiation as a form of energy,
(b) a wave guide which transmits the microwave radiation, and
(c) a first reaction chamber which receives the microwave radiation,
wherein at least a first chemical composition and the tissue specimen in contact therewith are surrounded within walls of the first reaction chamber;
wherein the microwave radiation is transmitted from the source to the first reaction chamber by the waveguide, the first chemical composition is brought from a first storage chamber to the first reaction chamber, and the tissue specimen is at least initially hardened by the first chemical composition, the microwave radiation, or both and wherein the first reaction chamber comprises a whispering galley mode which provide a substantially uniform distribution of temperature therewith due to the energy of the microwave radiation.

The at least initiating hardening is achieved by e.g., fixation, dehydration, or a combination thereof. The reaction chamber may contain a plurality of different tissue specimens; for example, the reaction chamber may be configured to contain a carrier or basket loaded with tissue specimens. The interior geometry of the reaction chamber is configured to achieve uniform distribution of microwave energy and heating of its contents. Similarly, the source and the waveguide may be configured to achieve minimal energy loss during transmission of the microwave radiation. Power delivered by the microwave source, and thus the heating of the reaction chamber's contents, may be regulated by a variable current source to allow continuous variation of the power.

The microwave unit may be further comprised of any combination with or without a removable container adapted to fit within the reaction chamber; at least one temperature and/or pressure probe to monitor conditions in the reaction chamber; a closure adapted to fit the reaction chamber and to isolate the reaction chamber from the operator's surroundings (e.g., a lid attached or removable from the reaction chamber); thermal insulation to retain heat in the reaction chamber; a seal to isolate electronic components from chemicals in the reaction chamber; and control circuitry to receive input from at least one probe and/or timer, and to regulate the microwave energy emanating from the source.

In contrast to the invention, batch processing is required by the prior art because that conventional methodology may take eight hours or longer. In the prior art, specimens are loaded into an automated instrument and cannot be loaded with additional specimens until the entire instrument cycle is completed. All the tissue specimens loaded into the prior art instrument are at the same stage of processing during the entire instrument cycle.

Further advantages of and improvements due to the invention are described below.

### BRIEF DESCRIPTION OF THE DRAWINGS

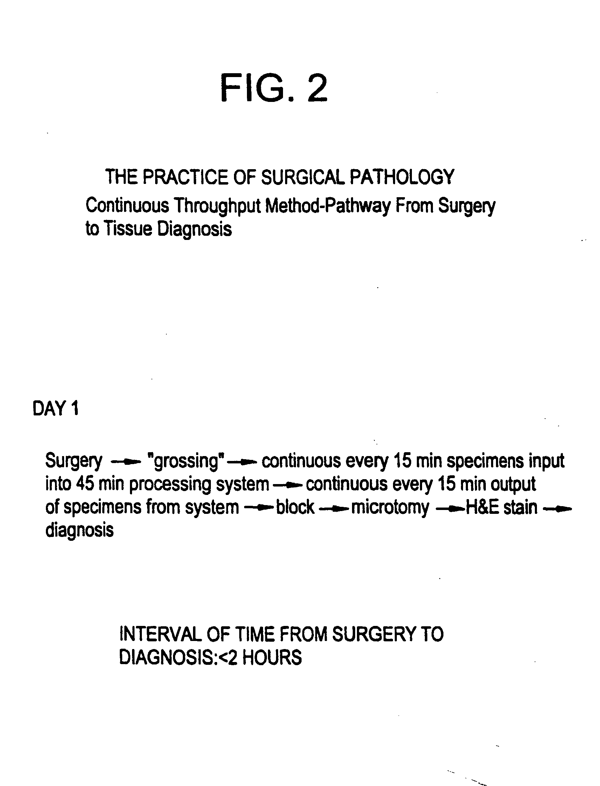

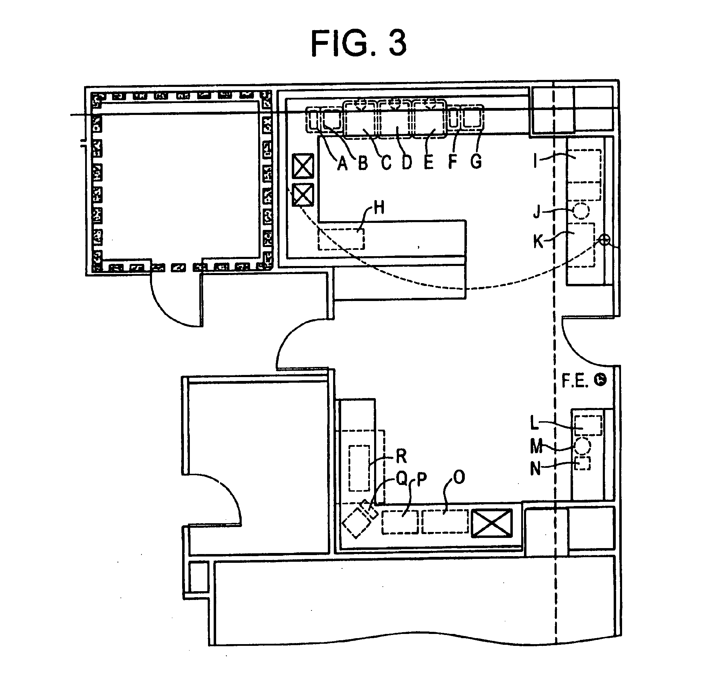

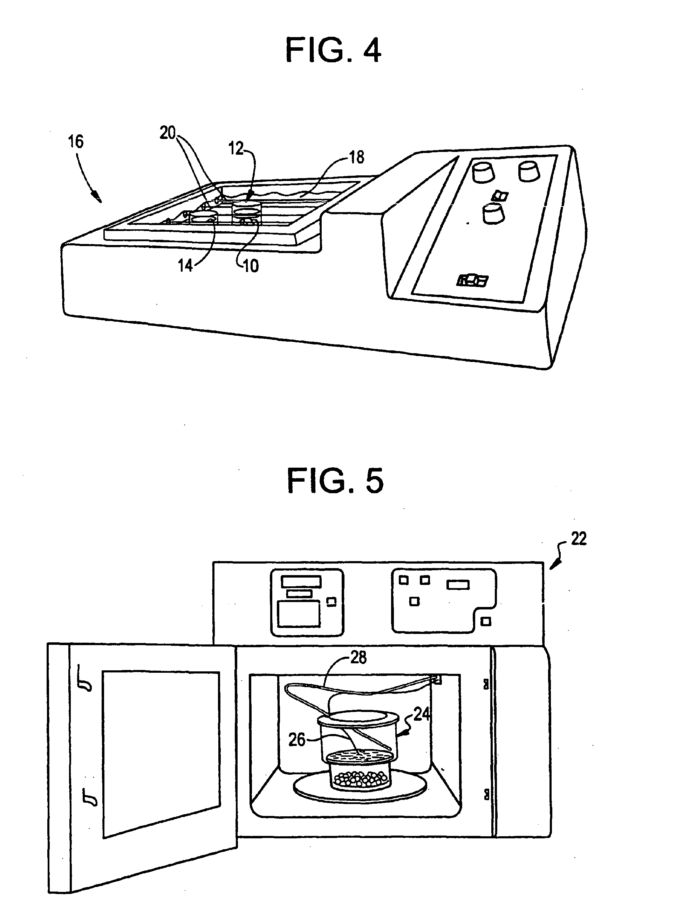

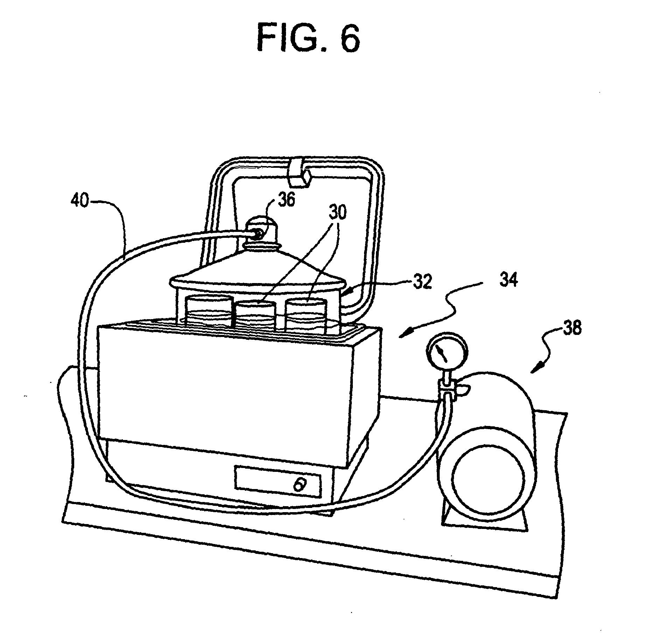

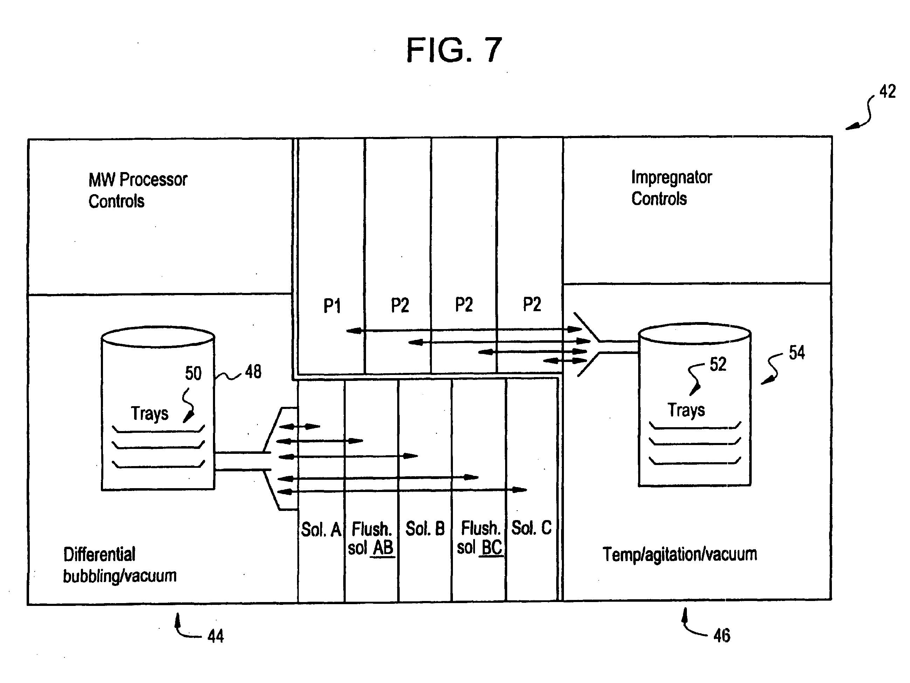

Figures 1-7 relate to the tissue processing method and apparatus disclosed in prior art document WO99/09390.
FIGURE 1 is a flow chart showing that almost 24 hours elapse between the time a tissue specimen is obtained by a surgeon and the time a diagnosis by a pathologist can be prepared from microscopic examination of sections of the tissue.
FIGURE 2 is a flow chart showing that diagnosis by a pathologist in accordance with the invention can be made available to the surgeon who provided the tissue specimen in about two hours or less.
FIGURE 3 is a schematic illustration of a tissue processing system that may be manually operated in batch and/or continuous mode.
FIGURE 4 shows a shaker bath, which does not provide either microwave heating or vacuum, for use in a manually-operated tissue processing system.
FIGURE 5 shows a conventional microwave oven provided for use in a manually-operated tissue processing system.
FIGURE 6 shows a paraffin bath provided for use in a manually-operated tissue processing system.
FIGURE 7 is a schematic illustration of a tissue processing system that is automated, and may be operated in batch and/or continuous mode.
FIGURE 8 is shows a microwave unit of the invention. Figure 8A is a cutaway top view and Figure 8B is a cutaway side view. Figure 8C is a more detailed side view of the reaction chamber of the microwave unit.
FIGURE 9 shows electrical components of a microwave unit of the invention.
FIGURE 10 is a block diagram of the control features of a microwave unit of the invention.
FIGURE 11 shows an impregnator unit of the invention.
FIGURE 12 is a schematic illustration of an alternative tissue processing system of the invention.
FIGURE 13 is a schematic illustration of an alternative tissue processing system of the invention (i.e., two series of modules arranged for parallel processing).

### DETAILED DESCRIPTION OF THE INVENTION

The microwave unit disclosed herein may be used to advantage in conventional tissue processing, but it has been developed in the context of and may be adapted for use in the process described herein and in U.S. Appln. Nos. 60/056,102 and 09/136,292 and published as WO 99/09390. Full details of the method and system are disclosed in that document.

The microwave unit used in the present invention provides gentle heating of a tissue specimen while preventing its over cooking, and uniform heating in the reaction chamber which to ensure specimens at different locations in the chamber are maintained at about the same temperature. Over cooking is defined as a change in the histologic structure of the tissue specimen because the microwave field is too intense. Microwaves can heat the tissue specimen better than the surrounding solution; this effect is minimized by allowing sufficient time for the heat to be dissipated from the tissue specimen into the surroundings.

The system for processing a tissue specimen of less than about three millimeters for histology according to the invention comprises:
(a) a source with generates microwave radiation as a form of energy,
(b) a waveguide which transmits the microwave radiation,
(c) a first reaction chamber which receives the microwave radiation,
(d) a first storage chamber in fluid communication with the reaction chamber,
(e) a second storage chamber in fluid communication with the reaction chamber and
(f) a third storage chamber in fluid communication with the reaction chamber,
wherein the first reaction chamber is comprised of an interior whisperying gallery mode which provides a substantially uniform distribution of temperature therewith in due to the energy of the microwave radiation.

The reaction chamber may contain a plurality of different tissue specimens. The interior geometry of the reaction chamber is configured to achieve uniform distribution of microwave energy and heating of its contents. Uniformity is achieved primarily by consideration of two factors.

First, the circumference of the reaction chamber is made to be an integral number of half wavelengths of the microwave radiation in the chamber. With proper arrangement of the waveguide entrance into the reaction chamber, a mode will be excited that will propagate around the exterior wall. This type of mode is characterized by the microwave field being predominantly near the exterior wall. A similar phenomenon occurs in acoustics where sound waves travel very efficiently next to solid walls. These types of modes are referred to as whispering gallery modes.

A second consideration is the radial distance between the boundary of solution in the reaction chamber and its wall. The optimum spacing is determined empirically by changing that spacing. If the spacing is too narrow, the microwave radiation is absorbed primarily near the waveguide entrance to the reaction chamber. If the spacing is too wide, the reaction chamber becomes a resonant cavity and is sensitive to the amount of non-aqueous solution and solids (e.g., tissue specimens, cassettes, and basket) therein. With the proper spacing, efficient heating of the solution and solids is achieved over an extensive range of heights of the contents as measured by a level sensor outside the reaction chamber (i.e., volumes therein). As little as 10% of the full height (i.e., total volume) still provides efficient heating of the contents.

Similarly, the source and the waveguide are configured to achieve minimal energy loss during transmission of the microwave radiation. The microwave unit is configured with a waveguide to have no more than about 2% energy loss from the source to the reaction chamber. A higher energy loss would require the use of expensive shielding and other protection devices for the source of the microwave energy.

Heating may be controlled by cycling power on-off in cycles of about 10 seconds to about 25 seconds because a minimum time is required by the heating characteristics of the cathode of the microwave source. But this may burn the tissue, so heating may be controlled through a variable current source to allow continuous variation in the power delivered by the microwave source to the reaction chamber. Such burning or over cooking is typified by homogeneous staining of tissue structures without distinguishing cellular features.

The microwave unit may be further comprised of any combination of a removable container adapted to fit in the reaction chamber and to receive at least one tissue specimen (e.g., a basket); at least one temperature and/or pressure probe to monitor conditions in the reaction chamber; one or more energy probes to monitor microwave energy being sent by the source, transmitted through the waveguide, and/or received by the reaction chamber; a closure adapted to fit the reaction chamber and to isolate the reaction chamber from the operator's surroundings; thermal insulation to retain heat in the reaction chamber; shielding to isolate electronic components from chemicals in the reaction chamber; and control circuitry to receive input from at least one probe or timer and thereby regulate at least one of the microwave energy from the source, transmitted through the waveguide, and/or received in the reaction chamber.

Characteristics of the materials used for the seal are the ability to hermetically isolate the reaction chamber from the environment, substantial transparency to microwave radiation, malleability to ensure a tight fit which conforms to the closure, and chemical resistance to solutions of the process. Modifying the reaction chamber with (a) a closure and a hermetic seal to reduce evaporation and (b) thermal insulation can reduce the power required to operate the microwave unit by two- or three-fold.

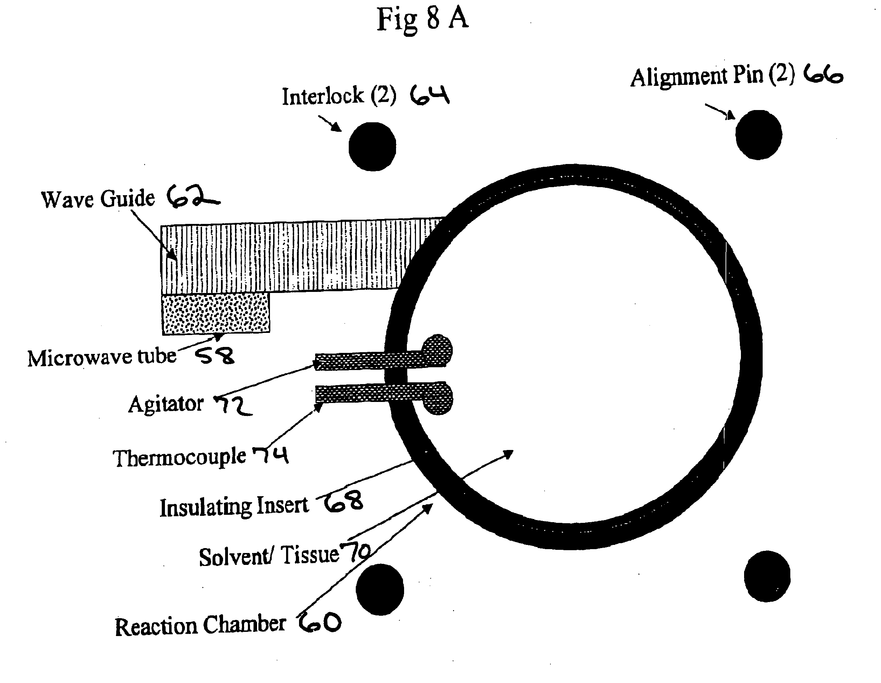

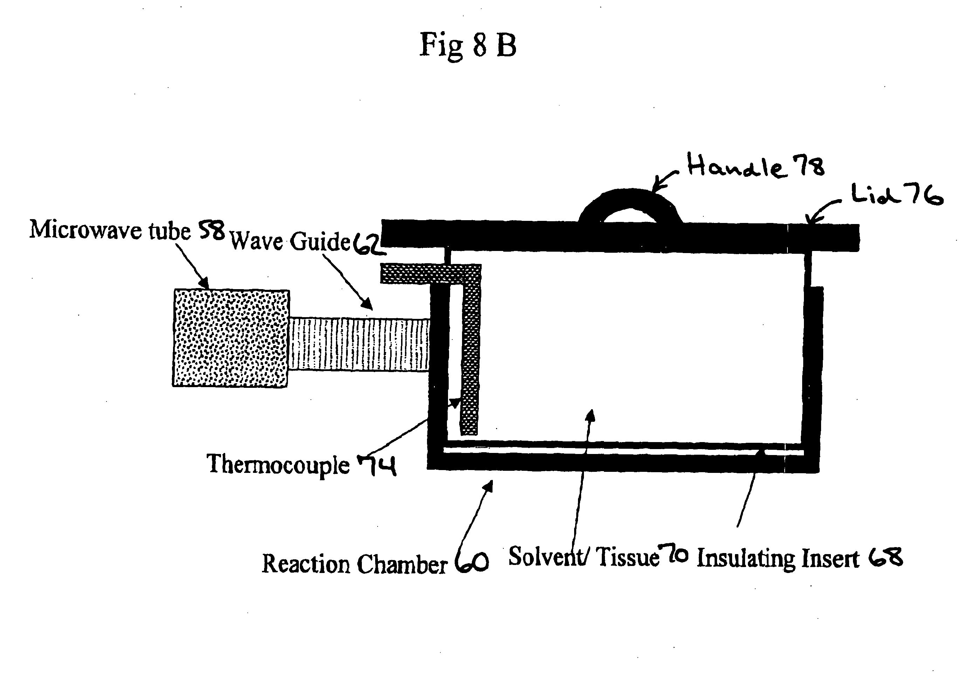

Figure 8A shows a cutaway top view and Figure 8B shows a cutaway side view of an exemplary microwave unit. Microwave energy is transferred from the microwave tube 58 to the reaction chamber 60 by the waveguide 62. Interlocks 64 ensure that the microwave unit will not operate while open and alignment pins 66 ensure that the unit is closed. An insulating insert 68 surrounds the contents 70 of the reaction chamber 60 to reduce heat loss. An agitator 72 and a thermocouple 74 is shown projecting into the reaction chamber 60. The lid 76 must be removed (e.g., by a robot arm lifting the handle 78) prior to grabbing a basket containing tissue specimens (not shown) and placing it into or taking it out of the reaction chamber 60.

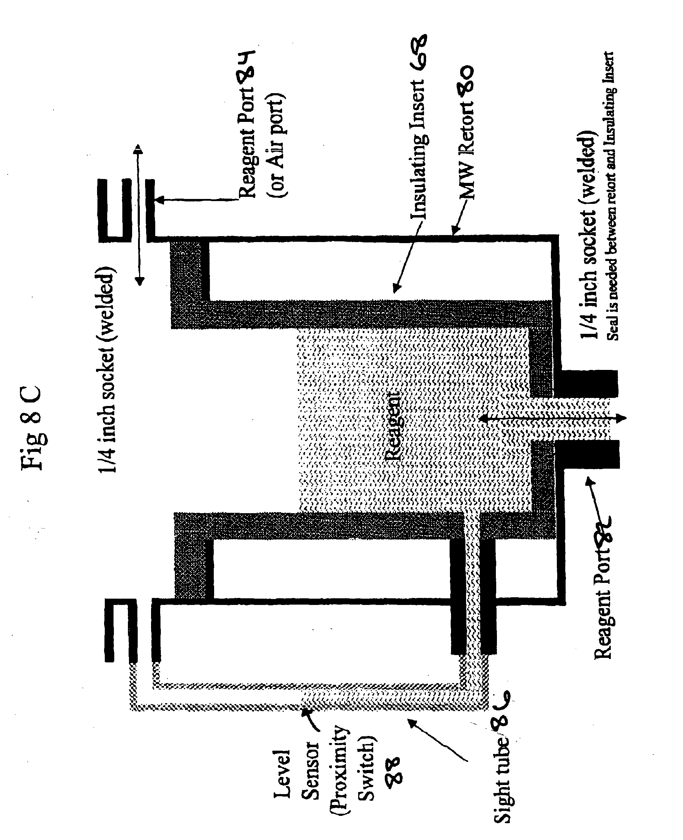

A more detailed view of the reaction chamber 60 of the exemplary microwave unit is shown in Figure 8C. The microwave unit is alternatively called a MW retort 80 because the reaction chamber 60 is isolated from the environment, but a vacuum is not required for hardening the tissue specimen. Reagent ports 82 may be used to transfer solutions into and out of the reaction chamber 60, or may be used to as an air port 84. A welded ¼-inch socket provides a seal between the insulating insert 68 and the MW retort 80. The solution level can be visualized through an external sight tube 86 connected to the interior of the reaction chamber 60. A proximity switch 88 serves as a level sensor.

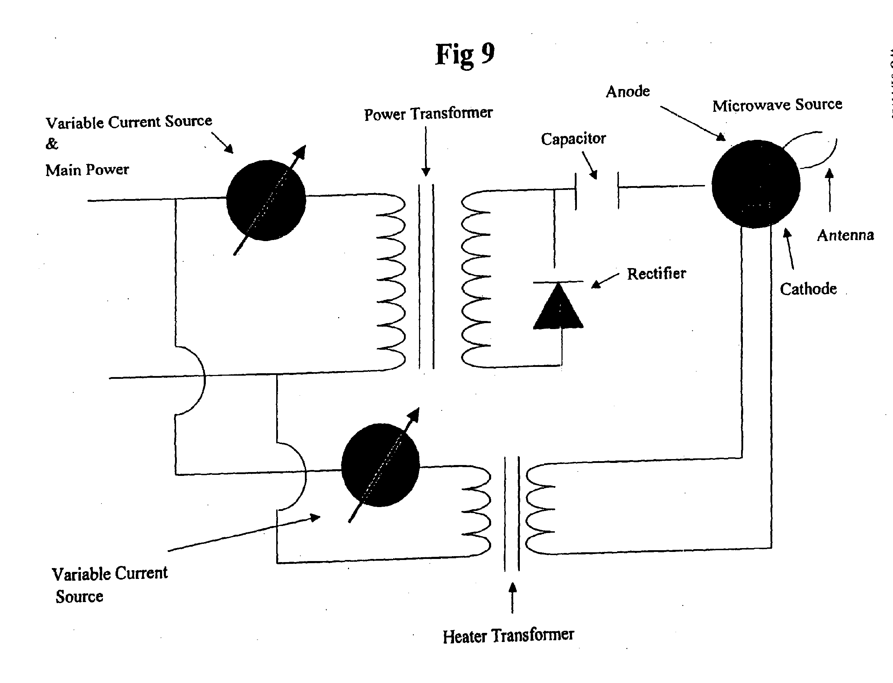

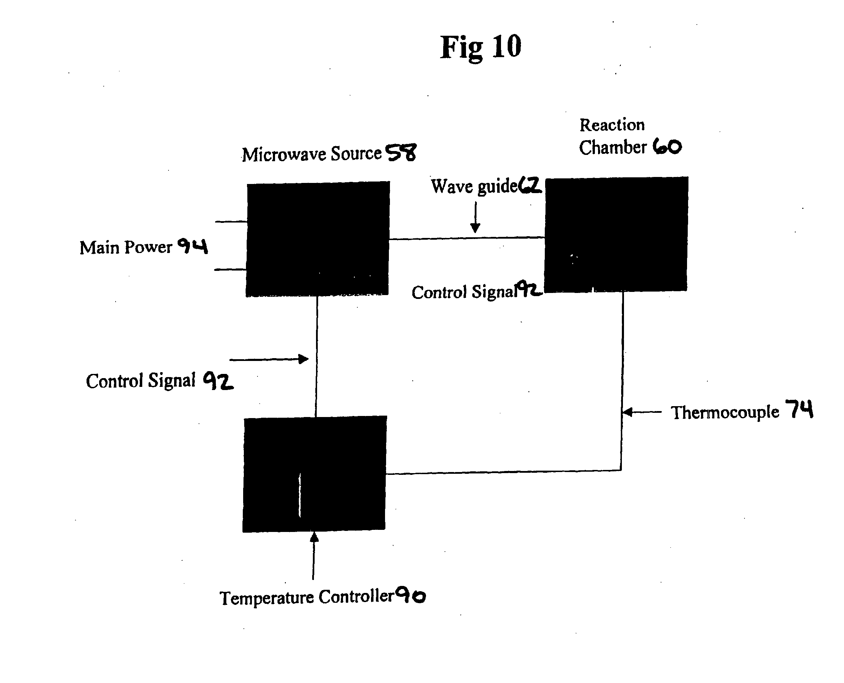

Electrical components of the exemplary microwave unit are shown in Figure 9. Control of the temperature of the contents of the reaction chamber 60 is shown in Figure 10. The temperature controller 90 is programmed with the desired temperature. A control signal 92 is sent to the microwave unit to apply power 94 to the microwave source 58, which microwave energy is transmitted by the waveguide 62 to the reaction chamber 60. The thermocouple 74 senses the temperature of the contents of the reaction chamber 60 and is fed back to the temperature controller 90. An algorithm or other program in the temperature controller 90 then adjusts the control signal 92 to make the sensed temperature approximately equal to the desired temperature.

The system for tissue processing may be comprised of a physically linked series of modules (e.g., reaction chambers with or without an operably linked microwave unit) to accomplish a combination of fixation, dehydration, defatting, clearing, and/or impregnation of a tissue specimen. The system may be comprised of one module or a plurality of them. Each module would constitute a part of the entire processing cycle, but an individual module may accomplish more than one of the steps of tissue processing (i.e., fixation, dehydration, defatting, clearing, and impregnation) because of the chemical composition contained therein. A recorder may be included to receive measurements of reaction conditions in at least one module and other performance characteristics of the system (e.g., amount of chemical in a module, time spent by a tissue specimen within a module or in contact with a chemical), and to store the measurements for retrieval by the operator.

The modules may occupy the same space and/or the tissue specimen may remain stationary. Microwave or thermal energy may be regulated and transmitted into the same space, or onto the stationary tissue specimen at different times in the process. Chemical solutions and/or vapors may be moved into or out of the same space, or brought into or out of contact with the stationary tissue specimen. Preferred is minimizing space requirements for the system by using one or two reaction chambers, and transporting the different chemical compositions into a reaction chamber by tubing or piping from separate storage and/or waste chambers. A controller can receive input from the reaction chamber and/or from timing that part of the processing cycle, and thereby regulate the transport of the different chemical compositions.

Alternatively, a plurality of modules containing at least four, five, or six different chemical compositions and to have at least one armature or track conveyance to move the tissue specimens among the modules may be provided. Thus, the system may comprise at least one, two, three, or four microwave units. In some embodiments, if a tissue specimen is transferred from one chemical composition to another with the same chemical composition, it may be possible to combine parts of the processing cycle into the same module with an exchange of the chemical composition therein. Thus, certain parts of the processing cycle may be combined and the number of different modules that are required could be reduced. Plumbing for fluid transfer may be simplified as compared to other embodiments previously described because the chemical composition may remain in the reaction chamber during the entire processing cycle and be moved into the reaction chamber only at the initiation of the cycle in a filling step, or out of the reaction chamber at the termination of the cycle in an emptying step. The number of modules may also be decreased to one or two (e.g., only one microwave unit and one impregnation unit) by using storage chambers in fluid communication with the reaction chamber and that are comprised of the different chemical compositions, and moving them into and out of the appropriate reaction chamber as needed. For example, pumps and multi-position rotary valves may be used to control fluid movement between reservoir and reaction chamber by pumping. Controller circuitry may also be simplified if movement between modules occurs in an integral multiple of a common block of time. Movement of the tissue specimen may be controlled by a program stored in memory such that the carrier or basket loaded with tissue specimens encounters modules in a particular order for set incubation times. The number of different modules, some of which may contain the same chemical composition, may be at least any integer from four to ten. Two, three, or four lines of modules may be arranged for parallel processing.

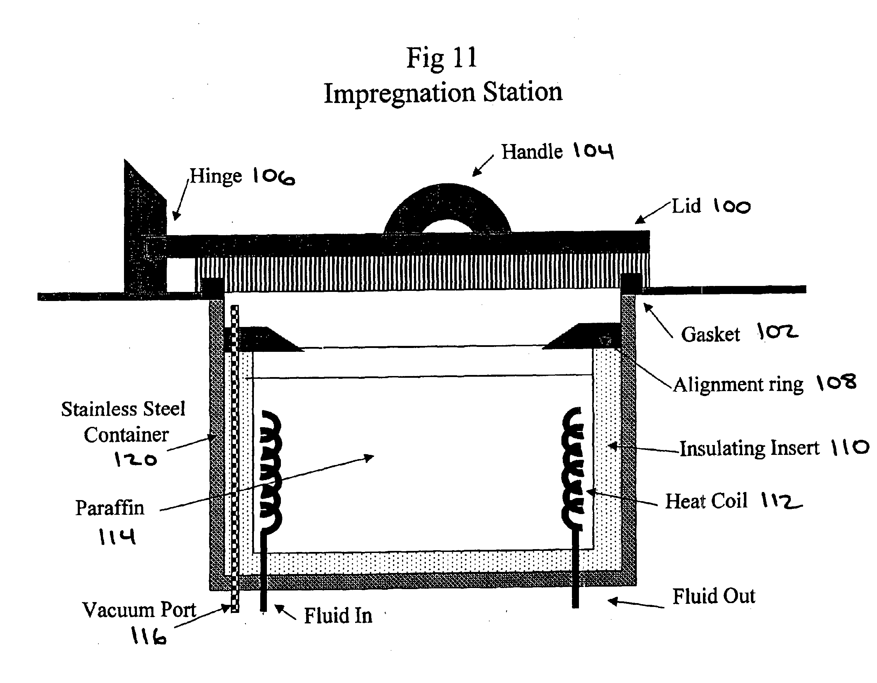

An exemplary impregnator unit is illustrated in Figure 11 with a hot fluid (e.g., water) passed through the heating coil 112 to maintain the impregnating agent 114 as a liquid. Radiant heat may be provided by such coil within the interior (e.g., heating coil 112) of the reaction chamber 120 or an electrical wire wrapping its exterior (not shown). A lid 100 and gasket 102 covers the reaction chamber 120 and is displaced using the handle 104 before a basket (not shown) containing tissue specimens is grabbed. Here, a hinge 106 shows how the lid 100 is attached to the reaction chamber 120. Stainless steel may be used as the exterior surface of the impregnator unit. An alignment ring 108 over an insulating insert 110 ensures proper placement of the basket into the reaction chamber 120. The insulating insert 110 (e.g., DELRIN or other plastic material) reduces heat loss during impregnation of the tissue specimen. Reducing the pressure within the reaction chamber 120 using the vacuum port 116 hastens impregnation. The lid 100 and gasket 102 maintains the vacuum within the reaction chamber 120 after its evacuation. During transfer, the temperature of the contents of the reaction chamber 120 of the impregnator unit is maintained within about 2°C.

Either transferring different solutions into and out of the reaction chamber or transferring the basket among reaction chambers containing different solutions may effect changes in reaction steps. Holding the basket above the interior of the reaction chamber for about 10 seconds allows excess solution to drain back through one or more openings in the bottom and/or sides before the basket is transferred. Thus, the sequence in which the basket is transferred among reaction chambers, each containing a particular composition of tissue processing chemicals, and the time the basket is incubated in each reaction chamber will dictate the series of chemical reactions necessary to accomplish the process according to the invention.

The lid can be removed; the gasket can be attached to the lid and moved with it. This process of removing the lid and gasket is performed for both the reaction chamber which initially contains the tissue specimens and the next reaction chamber into which the tissue specimens will be subsequently transferred. The basket is then removed, allows solution to drain from the basket and any cassettes which may be contained therein back into the reaction chamber for about 10 seconds, and transfers the basket to the reaction chamber containing the next chemical solution in the process. Finally, the lids and gaskets are replaced. The total time for such a transfer is about one minute.

For tissue processing, a plurality of modules containing at least four, five, or six different chemical compositions and to have at least one armature or track conveyance to move the tissue specimens among the modules may be used. The system may be comprised of at least one, two, or three microwave units. In preferred embodiments of the invention, if a tissue specimen is transferred from one chemical composition to another with the same chemical composition, it may be possible to combine these parts of the processing cycle into the same module with an exchange of the chemical composition therein. Thus, certain parts of the processing cycle may be combined and the number of different modules that are required could be reduced. Plumbing may be simplified as because, in many of the envisioned embodiments, the chemical composition may remain in the reaction chamber during the entire processing cycle and be moved into the reaction chamber only at the initiation of the cycle in a filling step, or out of the reaction chamber at the termination of the cycle in a emptying step. Controller circuitry may also be simplified if movement between modules occurs in an integral multiple of a common block of time. The number of different modules, some of which may contain identical chemical compositions, may be at least any integer from four to ten.

In accordance with the invention, variations on the above embodiments are envisioned. Various configurations of the tissue processing system are possible, and optional modules may be connected to form a portion of the system. The specific configuration chosen may be dictated by the average number of specimens that will be processed on a daily basis by the clinical laboratory, and/or the speed with which histology or pathology reports must be prepared.

The system may be manually operated or automated. Manual operation is particularly suited for research and development because variations in the process or apparatus may be quickly assessed. For automated instruments, tissue specimens may be transported by armature or track conveyance and/or chemical compositions may be transferred by corrosion-resistant plumbing. Thus, tissue processing may be automated by moving tissue specimens between stationary modules in a particular sequence for set times, filling and emptying modules of different chemicals such that stationary tissue specimens are incubated in a particular sequence for set times, or any combination thereof.

The armature conveyance may, for example, grab the specimen with a pincer-like mechanism or catch the specimen with a hook-like device. The arm may be articulated to perform human-like motion; or may be mounted in a fixed coordinate rack with linear or two dimensional movement, and optionally another dimension of movement provided by varying the height of the arm over the system. The track conveyance may be made from resilient or tacky material to fix the specimen on the track by friction, or there may be a regular series of bumps or walls to trap the specimen therebetween. The track may be formed as a continuous belt or may be a series of belts that convey the tissue specimen, with the belt put into motion with a roller or sprocket mechanism. The cassette or holder may be adapted for conveyance by having a stem (with or without a knob) to be grabbed or a loop to be caught by the arm, or by fitting within a groove or indentation in the track. Similarly, the cassette or holder may be organized in a carrier or basket for processing a large number of specimens, the carrier or basket being adapted for transport by the armature or track conveyance.

Electric motors and controllers may be used to transport a tissue specimen by the operator's real-time command or selection of a stored program. A simple mechanism of controlling the time spent by the tissue specimen in each module would be to move the tissue sample or holder thereof at a constant speed and to adjust the length of the path through each module to accommodate the intended incubation time.

The piping or flexible tubing, as well as other components of the plumbing, should resist corrosion by the chemicals used in tissue processing (e.g., polyethylene, polyvinyl chloride, Teflon, stainless steel). Mechanical or electric pumps/valves and controllers may be used to move chemical compositions in any combination from storage chamber to reaction chamber, from reaction chamber to storage chamber if the composition can be reused, from reaction chamber to waste chamber if the composition is to be flushed from the system, to fill the storage chamber, and to flush the waste chamber by the operator's real-time command or selection of a stored program. Heating a combination of plumbing components may be necessary to maintain the chemical composition at reaction temperature or to ensure that the chemical composition (e.g., paraffin-containing) is kept in a transportable fluid state. In contrast, vapor seals and/or cooling may be necessary to isolate corrosive vapors from the mechanical and electrical components of the system.

Specimens may be processed continuously and/or batchwise.

Safety considerations and precautions for an automated instrument (e.g., alarm monitor, proximity sensor) can be incorporated into the system.

Furthermore the accessories, disposable parts (e.g., cassettes, mesh bags), and reagents that have been adapted for use in the system may also be considered as a part of the system. These specially designed instruments and apparatuses have also been described in U.S. Appln. Nos. 60/056,102 and 09/136,292.

The present invention will have many advantages over conventional methods in the areas of the practice of pathology, patient care, biomedical research, and education.

The availability of microscopic diagnosis of tissue specimens within about one to six hours after receipt will allow rapid, or even real-time, clinical interaction between surgical intervention and pathological evaluation. For example, if 65 minutes is taken to process tissue, a stat diagnosis may be given in about two hours. This may bring about significant improvements in patient care by eliminating or reducing to a minimum patient anxiety during the wait for diagnosis of disease, prognosis, and planning for treatment.

Consequently, there will be a drastic reordering of the workflow in pathology laboratories. Clinical laboratory space, pathological expertise, and clerical and technical personnel will be utilized more efficiently. Continuous workflow will improve accessibility and responsiveness of pathologists who process and evaluate specimens, reduce the number of pathologists needed to process and evaluate specimens, and may also improve medical education, particularly the accessibility and responsiveness of residency programs.

The smaller volume of reagents will also result in cost savings. Elimination of formaldehyde and xylene, and the diminished requirement for other hazardous chemicals, will provide benefits to the environment and increased safety in the laboratory. The costs involved in handling and disposal of hazardous chemicals will be reduced.

Standardization of tissue fixation and processing procedures will ease comparison of specimens from different laboratories. Artifacts in histology due to the use of formaldehyde and/or prolonged processing will be eliminated; thus, allowing more precise evaluation of microscopic morphology of normal and diseased tissues. Similarly, antigen retrieval and staining will be improved. For genetic analysis, formaldehyde-induced DNA mutations will be eliminated and extraction of nucleic acid from archival material may be enhanced. The feasibility of RNA studies from stored, fixed paraffm-embedded tissue opens unlimited avenues for diagnostic and research applications.

The following example is meant to be illustrative of the present invention, but the practice of the invention is not limited or restricted in any way by them. N.B. Energy Beam Sciences' tissue microwave processors are examples of conventional microwave ovens that are available for commercial use.

Examples 1-6 of WO 99/09390 illustrate prior art tissue processing methods useful in understanding the present invention. Reference is made to the reagents and antibodies listed in WO 99/09390.

### EXAMPLE

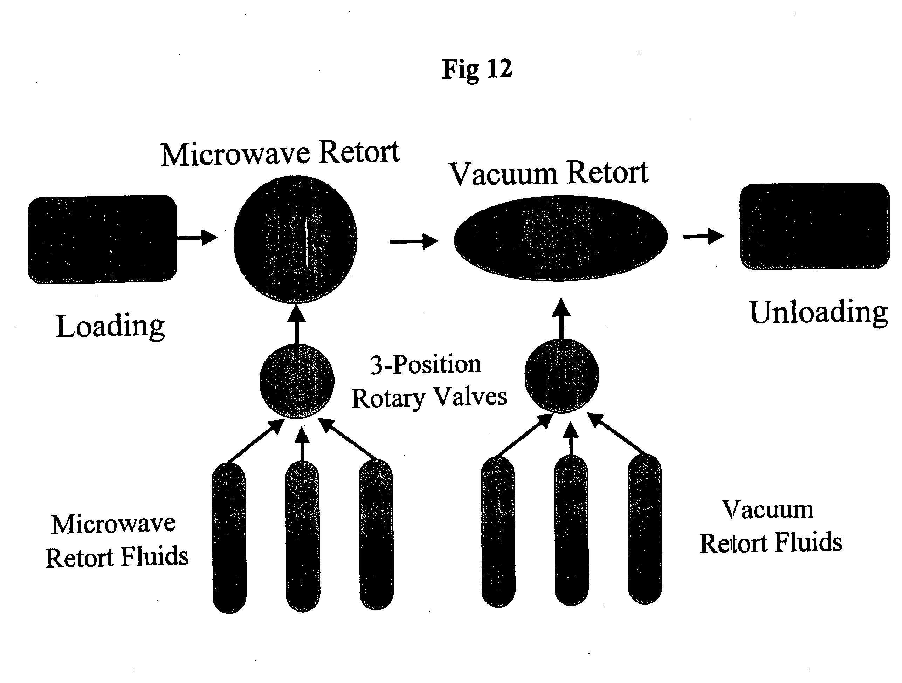

Tissue processing may be performed in the following manner using the system illustrated in Figure 12. Fluid levels in the reservoirs are checked, retorts are cleaned, and plumbing is flushed prior to operation. Vacuum is drawn and air pressure is raised to transfer solutions and, if needed, provide agitation of solutions within the retort by P/V cycling. Only impregnation in the vacuum retort requires a reduction in the pressure because tissue processing in the microwave retort (e.g., hardening and initial impregnation) is done at atmospheric pressure. Solutions and retorts are warmed to appropriate operating temperatures.

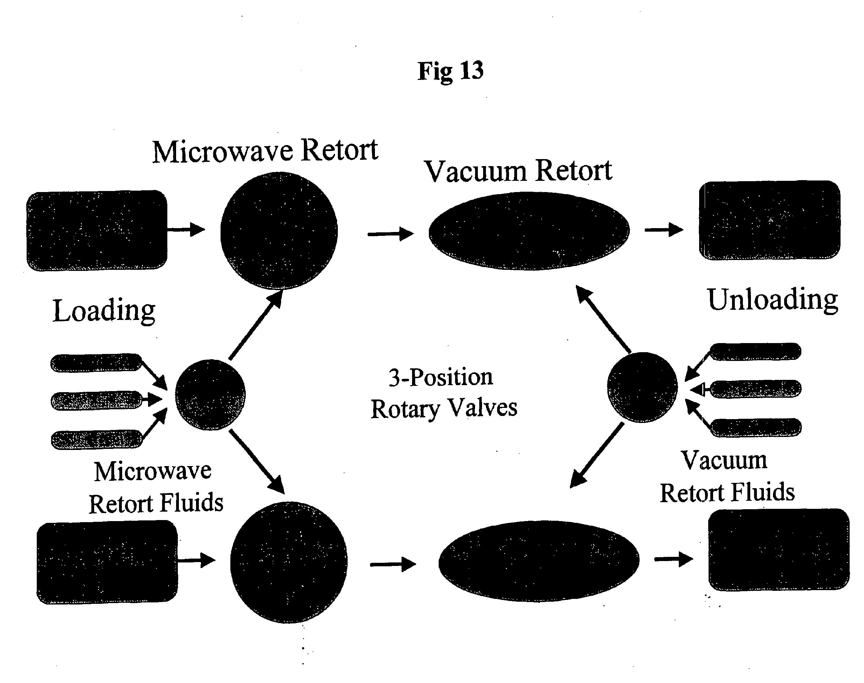

A basket containing samples in cassettes is loaded. If the system illustrated in Figure 13 is being used, then tissue processing can be performed in parallel because each series of retorts can be accessed independently. An arm or track moves the loaded basket from the loading station to the microwave retort, and then to the vacuum retort. Retorts may resemble the reaction chamber shown in Figures 8 and 11 for hardening and impregnation, respectively: no beaker insert is used and the lid is attached to the rest of the reaction chamber by a hinge. The lid can be moved aside (e.g., by grabbing a handle on the top of the lid) to open the reaction chamber. This allows access to the interior without having to rest the lid at a holding station. Finally, when tissue impregnation is completed, the loaded basket is moved from the vacuum retort to an unloading station containing molten paraffin. The time required to transfer the basket between stations is less than about 10 seconds. The tissue cassettes can then be unloaded from the basket.

The reaction chamber containing an impregnation agent (e.g., mineral oil, wax) may be heated using a common heating source. Alternatively, a heater maintains the temperature of water circulating in tubing in contact with the impregnation agent to keep it in a molten state. The hot water can be circulated to each station for which it is needed; each reaction chamber can be attached to a supply and return manifold. For example, a coil of tubing can be located inside the reaction chamber; this heating coil would then transfer heat to the contents. Preferably the heating coil is eliminated by wrapping the outside wall of the reaction chamber with electrical wire that conducts heat through the walls into the contents of the reaction chamber.

The process described in Example 3 of WO 99/09390 may be used in this system. Each different solution is stored in one of three reservoirs and can be transferred to or from the retort. For example, a three-position rotary valve can select the appropriate reservoir for that step and pumping at nominal pressures of 250 mm Hg can transfer solution into the retort while 0.35 Kg/cm² can transfer solution out of the retort; agitation can be performed by PN cycles of nominal pressure 0.35 Kg/cm² and 500 mm Hg vacuum. The connections (e.g., flexible tubing) between reservoirs and retorts, and the port where the connection joins each reservoir or retort, are not shown. Other conditions (e.g., times or temperatures for each step) are as described in Example 3 of WO99/09390.

While the invention has been described in connection with what is presently considered to be practical and preferred embodiments, it is understood that the present invention is not to be limited to the disclosed embodiments but, on the contrary, is intended to cover various modifications and equivalent arrangements included within the scope of the appended claims. Thus, it is to be understood that variations in the described invention will be obvious to those skilled in the art without departing from the novel aspects of the present invention and such variations are intended to come within the scope of the claims below.

Furthermore, it should be understood that an element contained in this specification should not be construed as a limitation of the claimed invention unless explicitly recited in the claims. Thus, the claims are the basis for determining the scope of legal protection granted instead of using the specification to import a limitation which is not explicitly recited in the claims.

## Claims

1. Use of a microwave unit for processing a tissue specimen of less than about three millimeters for histology, the microwave unit comprising:
(a) a source which generates microwave radiation as a form of energy,
(b) a waveguide which transmits the microwave radiation, and
(c) a first reaction chamber which receives the microwave radiation, wherein at least a first chemical composition and the tissue specimen in contact therewith are surrounded within walls of the first reaction chamber;
wherein the microwave radiation is transmitted from the source to the first reaction chamber by the waveguide, the first chemical composition is brought from a first storage chamber to the first reaction chamber, and the tissue specimen is at least Initially hardened by the first chemical composition, the microwave radiation, or both, **characterized in that** the first reaction chamber comprises a whispering gallery mode which provides a substantially uniform distribution of temperature therewithin due to the energy of the microwave radiation.

2. The use of Claim 1, wherein the microwave unit further comprises:
(d) a closure adapted to isolate the first reaction chamber,
(e) thermal Insulation surrounding the first reaction chamber,
(f) an agitator within the first reaction chamber to promote chemical exchange between the tissue specimen and the first chemical composition, and
(g) a port adapted to fill the first reaction chamber with the first chemical composition from the first storage chamber and to empty the first reaction chamber.

3. The use of Claim 1, wherein the temperature of a solution within the first reaction chamber is maintained between about 50°C and about 70°C.

4. The use of Claim 1, wherein the first chemical composition is a non-aqueous solution comprised of a fixative and a dehydrating agent.

5. The use of Claim 4, wherein the non-aqueous solution is comprised of a ketone and an alcohol.

6. The use of Claim 5, wherein the non-aqueous solution has a volume ratio of alcohol to ketone in a range between about 1:3 and 3:1.

7. The use of Claim 4, wherein the non-aqueous solution is further comprised of polymers between about 100 and 500 average molecular weight and a surfactant.

8. The use of Claim 4, wherein the tissue specimen is brought into contact with a series of at least two different chemical compositions which are non-aqueous solutions comprised of a ketone and an alcohol, wherein the volume ratio of alcohol to ketone changes between at least two non-aqueous solutions of the series.

9. The use of Claim 1, wherein the tissue specimen is substantially hardened by a plurality of different chemical compositions, the microwave radiation, or both.

10. The use of Claim 1, wherein the tissue specimen is substantially hardened in less than about 30 minutes.

11. The use of Claim 1, wherein the tissue specimen is substantially hardened in less than about two hours.

12. The use of Claim 1, wherein the source is a magnetron generating microwave radiation with a frequency between 2425 and 2575 megahertz.

13. The use of Claim 1 , wherein the microwave unit comprises a plurality of reaction chambers, each of said reaction chambers being connected by the waveguide to the source.

14. Use of a system comprising a plurality of modules each comprised of a reaction chamber and a chemical composition contained therein, for processing a tissue specimen of less than about three millimeters for histology, wherein the tissue specimen is processed by being brought into contact with each chemical composition in the reaction chamber of each module:
(a) at least one first module comprising a microwave unit as defined in Claim 1. wherein at least a second chemical composition is brought from a second storage chamber to the first reaction chamber and the tissue specimen is thereby at least initially impregnated;
(b) at least one second module comprising a second reaction chamber, wherein impregnation of the tissue specimen is substantially completed under less than atmospheric pressure within walls of the second reaction chamber; and
(c) a conveyance which transfers the tissue specimen between a said first module and a said second module.

15. The use of Claim 14, wherein the conveyance comprises a track connecting the said first module and the said second module.

16. The use of Claim 14, wherein the conveyance comprises an armature connecting the said first module and the said second module.

17. The use of Claim 14, wherein the system further comprises:
(d) a closure adapted to isolate the second reaction chamber,
(e) thermal insulation surrounding the second reaction chamber,
(f) a heater which maintains wax in molten form in the second reaction chamber, and
(g) a port adapted to fill the second reaction chamber with a molten wax solution.

18. The use of Claim 14, wherein the temperature of a solution within the second reaction chamber is maintained between about 50°C and about 70°C.

19. The use of Claim 14, wherein the second chemical composition is a non-aqueous solution comprised of fixative, dehydrating agent, and impregnating agent.

20. The use of Claim 14, wherein the second chemical composition is a non-aqueous solution comprised of a ketone, an alcohol, and mineral oil.

21. The use of Claim 14, wherein there are at least four different chemical compositions in separate storage chambers in fluid communication with at least said first module and at least one said second module in the system.

22. The use of Claim 14, wherein there are at least two parallel series of modules of the (a) and (b) types in the system, and transfer of tissue specimens within a series of modules is independently controlled.

23. The use of Claim 14, wherein a tissue specimen is substantially impregnated by wax in less than about 25 minutes.

24. The use of Claim 14, wherein a tissue specimen is substantially impregnated by wax in less than about two hours.

25. A system for processing a tissue specimen of less than about three millimeters for histology, the system comprising:
(a) source which generates microwave radiation as a form of energy,
(b) a waveguide which transmits the microwave radiation,
(c) a reaction chamber which receives the microwave radiation,
d) a first storage chamber in fluid communication with the reaction chamber,
(e) a second storage chamber in fluid communication with the reaction chamber, and
(f) a third storage chamber In fluid communication with the reaction Chamber, **characterized in that** the reaction chamber is comprised of an whispering gallery mode which provides a substantially uniform distribution of temperature therewithin due to the energy of the microwave radiation.

26. The system of Claim 25 further comprising a multi-position rotary valve and a pump which controls fluid transfer between the storage chambers and the reaction chamber by pressure/vacuum cycles.

27. The system of Claim 25 or 26, wherein the reaction chamber further comprises an agitator and a heater.

## Patentansprüche

1. Verwendung einer Mikrowellen-Einheit zur Bearbeitung einer Gewebeprobe von weniger als drei Millimetern zur Histologie, wobei die Mikrowelleneinheit
(a) eine Quelle, welche Mikrowellenstrahlung als Form von Energie erzeugt,
(b) einen Hohlleiter, der die Mikrowellenstrahlung überträgt und
(c) eine Reaktionskammer, die die Mikrowellenstrahlung empfängt, umfasst,
wobei wenigstens eine erste chemische Zusammensetzung und die damit in Kontakt befindliche Gewebeprobe von Wänden einer ersten Reaktionskammer umgeben sind,
wobei die Mikrowellenstrahlung von der Quelle zu der ersten Reaktionskammer mittels des Hohlleiters übertragen wird, die erste chemische Zusammensetzung aus einer ersten Vorratskammer in die erste Reaktionskammer eingebracht wird und die Gewebeprobe wenigstens anfänglich durch die erste chemische Zusammensetzung, die Mikrowellenstrahlung oder beides verhärtet wird,
**dadurch gekennzeichnet, dass**
die erste Reaktionskammer eine Flüstergalerie-Mode aufweist, welche aufgrund der Energie der Mikrowellenstrahlung eine im Wesentlichen gleichförmige Temperaturverteilung darin bereitstellt.

2. Verwendung gemäß Anspruch 1, wobei die Mikrowelleneinheit weiterhin
(d) einen Deckel, der zur Isolierung der ersten Reaktionskammer ausgestaltet ist,
(e) thermische Isolierung, die die erste Reaktionskammer umgibt,
(f) einen Rührer innerhalb der ersten Reaktionskammer, um den chemischen Austausch zwischen der Gewebeprobe und der ersten chemischen Zusammensetzung zu fördern, und
(g) eine Öffnung, die zum Füllen der ersten Reaktionskammer mit der ersten chemischen Zusammensetzung und zum Leeren der ersten Reaktionskammer ausgestaltet ist, umfasst.

3. Verwendung gemäß Anspruch 1 , wobei die Temperatur einer Lösung innerhalb der ersten Reaktionskammer zwischen ungefähr 50 °C und ungefähr 70 °C gehalten wird.

4. Verwendung gemäß Anspruch 1, wobei die erste chemische Zusammensetzung eine nicht-wässrige Lösung, umfassend ein Fixierungsmittel und ein Dehydratisierungsmittel, ist.

5. Verwendung gemäß Anspruch 4, wobei die nicht-wässrige Lösung ein Keton und einen Alkohol umfasst.

6. Verwendung von Anspruch 5, wobei die nicht-wässrige Lösung ein Volumenverhältnis von Alkohol zu Keton in einem Bereich zwischen ungefähr 1 : 3 und 3 : 1 aufweist.

7. Verwendung gemäß Anspruch 4, wobei die nicht-wässrige Lösung weiterhin Polymere mit einem mittleren Molekulargewicht zwischen ungefähr 100 und 500 und ein Tensid aufweist.

8. Verwendung gemäß Anspruch 4, wobei die Gewebeprobe mit einer Serie von mindestens zwei verschiedenen chemischen Zusammensetzungen, welche nicht-wässrige Lösungen, umfassend ein Keton und einen Alkohol, sind, wobei sich das Volumenverhältnis von Alkohol zu Keton zwischen den mindestens zwei nicht-wässrigen Lösungen der Serie ändert, in Kontakt gebracht wird.

9. Verwendung gemäß Anspruch 1, wobei die Gewebeprobe im Wesentlichen durch eine Vielzahl an verschiedenen chemischen Zusammensetzungen, die Mikrowellen-Strahlung oder beidem verhärtet wird.

10. Verwendung gemäß Anspruch 1 , wobei die Gewebeprobe im Wesentlichen in weniger als ungefähr 30 Minuten verhärtet wird.

11. Verwendung gemäß Anspruch 1, wobei die Gewebeprobe im Wesentlichen in weniger als zwei Stunden verhärtet wird.

12. Verwendung gemäß Anspruch 1, wobei die Quelle ein Magnetron ist, das Mikrowellen-Strahlung mit einer Frequenz zwischen 2425 und 2575 Megahertz erzeugt.

13. Verwendung gemäß Anspruch 1, wobei die Mikrowellen-Einheit eine Vielzahl an Reaktionskammern umfasst, wobei jede dieser Reaktionskammern über den Hohlleiter mit der Quelle verbunden ist.

14. Verwendung eines Systems, umfassend eine Vielzahl an Modulen, wobei jedes eine Reaktionskammer und eine darin enthaltene chemische Zusammensetzung umfasst, zur Bearbeitung einer Gewebeprobe von weniger als drei Millimetern zur Histologie, wobei die Gewebeprobe durch in Kontakt bringen mit jeder chemischen Zusammensetzung in der Reaktionskammer jedes Moduls verarbeitet wird:
(a) wenigstens ein erstes Modul, umfassend eine Mikrowellen-Einheit wie in Anspruch 1 definiert, wobei wenigstens eine zweite chemische Zusammensetzung von einer zweiten Vorratskammer in die erste Reaktionskammer eingebracht wird und die Gewebeprobe **dadurch** zumindest anfänglich imprägniert wird,
(b) wenigstens ein zweites Modul, umfassend eine zweite Reaktionskammer, wobei die Imprägnierung der Gewebeprobe im Wesentlichen unterhalb von Atmosphärendruck innerhalb der Wände der zweiten Reaktionskammer vervollständigt wird, und
(c) ein Beförderungsmittel, welches die Gewebeprobe zwischen einem genannten ersten Modul und einem genannten zweiten Modul transferiert.

15. Verwendung gemäß Anspruch 14, wobei das Beförderungsmittel eine Bahn umfasst, die das genannte erste Modul mit dem genannten zweiten Modul verbindet.

16. Verwendung gemäß Anspruch 14, wobei das Beförderungsmittel eine Armatur umfasst, die das genannte erste Modul mit dem genannten zweiten Modul verbindet.

17. Verwendung gemäß Anspruch 14, wobei das System ferner
(d) einen Deckel, der zur Isolierung der zweiten Reaktionskammer ausgestaltet ist,
(e) thermische Isolierung, die die zweite Reaktionskammer umgibt,
(f) ein Heizgerät, das Wachs in geschmolzener Form hält, in der zweiten Reaktionskammer, und
(g) eine Öffnung, die zum Füllen der zweiten Reaktionskammer mit einer geschmolzenen Wachslösung ausgestaltet ist, umfasst.

18. Verwendung gemäß Anspruch 14, wobei die Temperatur einer Lösung innerhalb der zweiten Reaktionskammer zwischen ungefähr 50 °C und ungefähr 70 °C gehalten wird.

19. Verwendung gemäß Anspruch 14, wobei die erste chemische Zusammensetzung eine nicht-wässrige Lösung, umfassend ein Fixierungsmittel, ein Dehydratisierungsmittel und ein Imprdgnierungsmittel, umfasst.

20. Verwendung gemäß Anspruch 14, wobei die nicht-wässrige Lösung ein Keton, einen Alkohol und ein Mineralöl umfasst.

21. Verwendung gemäß Anspruch 14, wobei mindestens vier verschiedene chemische Zusammensetzungen in separaten Vorratskammern in fluider Verbindung mit wenigstens dem genannten ersten Modul und wenigstem einem genannten zweiten Modul des Systems stehen.

22. Verwendung gemäß Anspruch 14, wobei mindestens zwei parallele Serien an Modulen des (a)- und (b)-Typs im System vorhanden sind und der Transfer der Gewebeproben innerhalb einer Serie an Modulen unabhängig kontrolliert wird.

23. Verwendung gemäß Anspruch 14, wobei eine Gewebeprobe in weniger als ungefähr 25 Minuten durch Wachs im Wesentlichen imprägniert wird.

24. Verwendung gemäß Anspruch 14, wobei eine Gewebeprobe in weniger als ungefähr zwei Stunden durch Wachs im Wesentlichen imprägniert wird.

25. Ein System zur Bearbeitung einer Gewebeprobe von weniger als drei Millimetern zur Histologie, wobei das System
(a) eine Quelle, welche Mikrowellenstrahlung als Form von Energie erzeugt,
(b) einen Hohlleiter, der die Mikrowellenstrahlung überträgt und
(c) eine Reaktionskammer, die die Mikrowellenstrahlung empfängt,
(d) eine erste Vorratskammer in fluider Verbindung mit der Reaktionskammer,
(e) eine zweite Vorratskammer in fluider Verbindung mit der Reaktionskammer,
(f) eine dritte Vorratskammer in fluider Verbindung mit der Reaktionskammer umfasst,
**dadurch gekennzeichnet, dass**
die erste Reaktionskammer eine Flüstergalerie-Betriebsart aufweist, welche aufgrund der Energie der Mikrowellenstrahlung eine im Wesentlichen gleichförmige Temperaturverteilung darin bereitstellt.

26. System gemäß Anspruch 25, welches ferner ein Multi-Positionsdrehventil und eine Pumpe, welche den Fluidtransfer zwischen der Vorratskammer und der Reaktionskammer mittels Druck/Vakuum-Zyklen kontrolliert, aufweist.

27. System gemäß Anspruch 25 oder 26, wobei die Reaktionskammer ferner einen Rührer und ein Heizgerät aufweist.

## Revendications

1. Utilisation d'une unité à micro-ondes afin de traiter un échantillon de tissu inférieur à environ trois millimètres pour histologie, l'unité à micro-ondes comprenant :
(a) une source qui génère un rayonnement micro-onde en tant que forme d'énergie
(b) un guide d'ondes qui transmet le rayonnement micro-onde et,
(c) une première chambre de réaction qui reçoit le rayonnement micro-onde, dans laquelle au moins une première composition chimique et l'échantillon de tissu en contact avec celle-ci sont entourés des parois de la première chambre de réaction ;
dans laquelle le rayonnement micro-onde est transmis depuis la source jusqu'à la première chambre de réaction par le guide d'ondes, la première composition chimique est acheminée depuis une première chambre de stockage jusqu'à la première chambre de réaction, et l'échantillon de tissu est au moins initialement durci par la première composition chimique, le rayonnement micro-onde ou les deux, **caractérisée en ce que** la première chambre de réaction comprend un mode de chuchotement en galerie qui fournit une répartition substantiellement uniforme de la température à l'intérieur de celle-ci en raison de l'énergie du rayonnement micro-onde.

2. Utilisation selon la revendication 1, dans laquelle l'unité à micro-ondes comprend, en outre :
(d) une fermeture adaptée pour isoler la première chambre de réaction,
(e) une isolation thermique entourant la première chambre de réaction,
(f) un agitateur à l'intérieur de la première chambre de réaction pour favoriser l'échange chimique entre l'échantillon de tissu et la première composition chimique, et
(g) une partie adaptée pour remplir la première chambre de réaction avec la première composition chimique à partir de la première chambre de stockage et pour vider la première chambre de réaction.

3. Utilisation selon la revendication 1, dans laquelle la température d'une solution à l'intérieur de la première chambre de réaction est maintenue entre environ 50° C et environ 70° C.

4. Utilisation selon la revendication 1, dans laquelle la première composition chimique est une solution non aqueuse comprenant un fixateur et un agent déshydratant.

5. Utilisation selon la revendication 4, dans laquelle la solution non aqueuse comprend une cétone et un alcool.

6. Utilisation selon la revendication 5, dans laquelle la solution non aqueuse a un rapport volumique de l'alcool à la cétone dans une plage allant d'environ 1:3 à 3:1.

7. Utilisation selon la revendication 4, dans laquelle la solution non aqueuse comprend, en outre, des polymères ayant un poids moléculaire moyen allant d'environ 100 à 500 et un agent tensioactif.

8. Utilisation selon la revendication 4, dans laquelle l'échantillon de tissu est amené en contact avec une série d'au moins deux compositions chimiques différentes qui sont des solutions non aqueuses comprenant une cétone et un alcool, dans lesquelles le rapport volumique de l'alcool à la cétone change entre au moins deux solutions non aqueuses de la série.

9. Utilisation selon la revendication 1, dans laquelle l'échantillon de tissu est substantiellement durci par une pluralité de compositions chimiques différentes, le rayonnement micro-onde ou les deux.

10. Utilisation selon la revendication 1, dans laquelle l'échantillon de tissu est substantiellement durci en moins d'environ 30 minutes.

11. Utilisation selon la revendication 1, dans laquelle l'échantillon de tissu est substantiellement durci en moins d'environ 2 heures.

12. Utilisation selon la revendication 1, dans laquelle la source est un magnétron générant un rayonnement micro-onde avec une fréquence allant de 2 425 à 2 575 mégahertz.

13. Utilisation selon la revendication 1, dans laquelle l'unité à micro-ondes comprend une pluralité de chambres de réaction, chacune desdites chambres de réaction étant connectée par le guide d'ondes à la source.

14. Utilisation d'un système comprenant une pluralité de modules, chacun comprenant une chambre de réaction et une composition chimique contenue dans celle-ci afin de traiter un échantillon de tissu inférieur à environ trois millimètres pour histologie, dans laquelle l'échantillon de tissu est traité en étant amené en contact avec chaque composition chimique dans la chambre de réaction de chaque module :
(a) au moins un premier module comprenant une unité à micro-ondes telle que définie dans la revendication 1, dans laquelle au moins une deuxième composition chimique est acheminée depuis une deuxième chambre de stockage jusqu'à la première chambre de réaction et l'échantillon de tissu est, de ce fait, au moins initialement imprégné ;
(b) au moins un deuxième module comprenant une deuxième chambre de réaction, dans laquelle l'imprégnation de l'échantillon de tissu est substantiellement terminée à une pression inférieure à la pression atmosphérique à l'intérieur des parois de la deuxième chambre de réaction ; et
(c) un moyen de transfert qui transfère l'échantillon de tissu entre un dit premier module et un dit deuxième module.

15. Utilisation selon la revendication 14, dans laquelle le moyen de transfert comprend une piste connectant ledit premier module et ledit deuxième module.

16. Utilisation selon la revendication 14, dans laquelle le moyen de transfert comprend une armature connectant ledit premier module et ledit deuxième module.

17. Utilisation selon la revendication 14, dans laquelle le système comprend en outre :
(d) une fermeture adaptée pour isoler la deuxième chambre de réaction,
(e) une isolation thermique entourant la deuxième chambre de réaction,
(f) un élément chauffant qui maintient la cire en fusion dans la deuxième chambre de réaction, et
(g) une partie adaptée pour remplir la deuxième chambre de réaction avec une solution de cire en fusion.

18. Utilisation selon la revendication 14, dans laquelle la température d'une solution à l'intérieur de la deuxième chambre de réaction est maintenue entre environ 50° C et environ 70° C.

19. Utilisation selon la revendication 14, dans laquelle la deuxième composition chimique est une solution non aqueuse comprenant un fixateur, un agent déshydratant et un agent d'imprégnation.

20. Utilisation selon la revendication 14, dans laquelle la deuxième composition chimique est une solution non aqueuse comprenant une cétone, un alcool et une huile minérale.

21. Utilisation selon la revendication 14, dans laquelle il existe au moins quatre compositions chimiques différentes, dans des chambres de stockage séparées en communication fluidique avec au moins ledit premier module et au moins un dit deuxième module dans le système.

22. Utilisation selon la revendication 14, dans laquelle il y a au moins deux séries parallèles de modules des types (a) et (b) dans le système, et le transfert des échantillons de tissu à l'intérieur d'une série de modules est contrôlé indépendamment.

23. Utilisation selon la revendication 14, dans laquelle un échantillon de tissu est substantiellement imprégné par de la cire en moins d'environ 25 minutes.

24. Utilisation selon la revendication 14, dans laquelle un échantillon de tissu est substantiellement imprégné par de la cire en moins d'environ 2 heures.

25. Système de traitement d'un échantillon de tissu inférieur à environ trois millimètres pour histologie, ce système comprenant .
(a) une source qui génère un rayonnement micro-onde en tant que forme d'énergie,
(b) un guide d'ondes qui transmet le rayonnement micro-onde,
(c) une chambre de réaction qui reçoit le rayonnement micro-onde,
(d) une première chambre de stockage en communication fluidique avec la chambre de réaction,
(e) une deuxième chambre de stockage en communication fluidique avec la chambre de réaction, et
(f) une troisième chambre de stockage en communication fluidique avec la chambre de réaction,
**caractérisé en ce que** la chambre de réaction comprend un mode de chuchotement en galerie qui fournit une répartition substantiellement uniforme de la température à l'intérieur de celle-ci en raison de l'énergie du rayonnement micro-onde.

26. Système selon la revendication 25, comprenant en outre une vanne rotative multi-positions et une pompe qui contrôle le transfert des fluides entre les chambres de stockage et la chambre de réaction au moyen de cycles de pression/vide.

27. Système selon la revendication 25 ou 26, dans lequel la chambre de réaction comprend au moins, un agitateur et un élément chauffant.
